# EUROPEAN PATENT SPECIFICATION

(11) **EP 2 837 672 B1**
(45) Date of publication and mention of the grant of the patent: **31.08.2016**
(21) Application number: 13775328.1
(22) Date of filing: 09.04.2013
(51) Int. Cl.: C09K 21/02, C08K 3/22, C08L 101/00, H01B 3/00, H01B 3/30, H01B 7/295, C01F 5/14, H01B 3/44

(54) **COMPOSITE FLAME RETARDANT, RESIN COMPOSITION, AND MOLDED ARTICLE**
FEUERFESTER VERBUNDSTOFF, HARZZUSAMMENSETZUNG UND FORMPRODUKT
AGENT IGNIFUGE COMPOSITE, COMPOSITION DE RÉSINE ET OBJET MOULÉ

(30) Priority: 10.04.2012 JP 2012089441
(43) Date of publication of application: 18.02.2015
(73) Proprietor: Kyowa Chemical Industry Co., Ltd, Takamatsu-shi, Kagawa 761-0113 (JP)
(72) Inventor: KUDO, Daisuke, Sakaide-shi Kagawa 762-0012 (JP); OOHORI, Kohei, Sakaide-shi Kagawa 762-0012 (JP); NAMABE, Hitoshi, Sakaide-shi Kagawa 762-0012 (JP); MIYATA, Shigeo, Kitakyushu-shi Fukuoka 807-1123 (JP)
(74) Representative: Raynor, Stuart Andrew
(86) International application number: PCT/JP2013/061140
(87) International publication number: WO 2013/154200

(56) References cited:
- EP-A1- 1 063 199
- EP-A2- 1 837 367
- WO-A1-00/35808
- WO-A1-98/46673
- WO-A1-2005/077829
- DE-T5-112005 003 234
- JP-A- H02 284 940
- JP-A- 2002 356 539
- JP-A- 2006 176 611
- JP-A- 2006 199 934
- US-A- 5 476 642
- US-A1- 2007 176 155
- US-A1- 2011 143 139

## Description

### TECHNICAL FIELD

The present invention relates to use of magnesium hydroxide particles having a plate-like crystal form and an aspect ratio within a specific range as a flame retardant.

### BACKGROUND ART

Magnesium hydroxide particles are used as a flame retardant to be mixed with a resin. The magnesium hydroxide particles can be produced by using bittern, sea water or dolomite as a magnesium source and lime or caustic soda as an alkali source. It is known that it is produced through the hydration reaction of magnesium oxide. It is also known that it is produced by reacting a magnesium salt with ammonia to crystallize magnesium hydroxide.

In the production process of magnesium hydroxide particles, it is known that magnesium hydroxide fine particles are produced by adding at least one compound selected from the group consisting of an organic acid, boric acid, silicic acid and water-soluble salts thereof all of which are not directly involved in the production of magnesium hydroxide particles at the time of hydrothermal processing (patent document 1).

In order to obtain a satisfactory flame retarding effect by containing conventional magnesium hydroxide particles in a resin, the magnesium hydroxide particles must be used in an amount of at least 160 parts by weight based on 100 parts by weigh of the resin.

Although plate-like magnesium hydroxide particles having a large particle diameter and a high aspect ratio (patent document 2) exhibits a satisfactory flame retarding effect even when it is used in an amount of 160 parts or less by weight, it has a problem that the mechanical strength of a molded product thereof deteriorates, thereby greatly impairing the characteristic properties of the resin.
Patent Document 1 JP-A 2000-233924
Patent Document 2 WO2012/050222

### DISCLOSURE OF THE INVENTION

It is an object of the present invention to provide a composite flame retardant which exhibits excellent flame retardancy, is excellent in dispersibility in a resin and can suppress the deterioration of the mechanical strength of a resin. It is another object of the present invention to provide a resin composition which comprises this composite flame retardant.

The inventors of the present invention found that when magnesium hydroxide (particles (B)) which has been used as a flame retardant is mixed with magnesium hydroxide particles (A) having a high aspect ratio in a certain ratio, a satisfactory flame retarding effect is obtained even with a relatively low content. The present invention was accomplished based on this finding.

That is, the present invention is a composite flame retardant which comprises
(i) 100 parts by weight of magnesium hydroxide particles (A) having an average thickness of 10 to 100 nm, an average width of 2.4 µm or more and an average aspect ratio of 20 to 120 and
(ii) 100 to 900 parts by weight of magnesium hydroxide particles (B) having an average width of 1 µm or less and an average aspect ratio of less than 20.

Further, the present invention is a resin composition comprising 100 parts by weight of a synthetic resin and 50 to 200 parts by weight of the above composite flame retardant.

### BRIEF DESCRIPTION OF THE DRAWINGS

Fig. 1 is a diagram showing how to obtain the aspect ratio;
Fig. 2 shows the results of an oxygen index test (LOI) in Comparative Example 2 and Examples 5 and 6; and
Fig. 3 shows an SEM photo (5,000 magnifications) of composite flame retardant C-1 obtained in Example 1.

### BEST MODE FOR CARRYING OUT THE INVENTION

### <magnesium hydroxide particles (A)>

The average thickness (Y) of the magnesium hydroxide particles (A) is 10 to 100 nm, preferably 10 to 50 nm, more preferably 10 to 30 nm. The average thickness is an arithmetic average value obtained by measuring the thicknesses of 10 particles with a nano-search microscope.

The average width (X) of the magnesium hydroxide particles (A) is 2.4 µm or more, preferably 3 µm or more, more preferably 3. 5 µm or more. The upper limit is preferably 10 µm, more preferably 5 µm. The average width is actually measured from an image obtained by an electron beam microscope. As the average width becomes larger, when the magnesium hydroxide particles are used as an additive for a synthetic resin, the total area of their contact surfaces with the synthetic resin decreases, mechanical strength deteriorates and unintended luster appears, thereby changing the appearance, though heat stability improves.

The average aspect ratio of the magnesium hydroxide particles (A) is 20 to 120, preferably 40 to 120, more preferably 50 to 120.

The aspect ratio (X/Y) is a value calculated from the actually measured values of the average width (X) and the average thickness (Y).

The BET specific surface area of the magnesium hydroxide particles (A) is preferably 1 to 90 m²/g, more preferably 2 to 50 m²/g, much more preferably 5 to 30 m²/g.

Preferably, the magnesium hydroxide particles (A) have a disk-like crystal form and an average width of 2.4 to 10 µm.

The magnesium hydroxide particles (A) can be obtained by making at least one compound selected from the group consisting of monovalent carboxylic acids and water-soluble salts thereof existent in a specific ratio in a reaction step or a hydrothermal processing step in a process known per se for producing magnesium hydroxide particles from magnesium chloride or magnesium oxide as a raw material. Examples (I) to (IV) of the process for producing magnesium hydroxide particles (A) are given below.

### (production process (I))

The production process (I) is characterized in that, in a process for producing magnesium hydroxide particles by reacting magnesium chloride with an alkali substance in an aqueous medium, at least one compound (to be referred to as "additive compound" hereinafter) selected from the group consisting of monovalent carboxylic acids and water-soluble salts thereof is added in an amount of 10 to 200 mol% based on magnesium chloride.

The feature of the production process (I) is that a predetermined amount of the additive compound is existent in the reaction system in the production of magnesium hydroxide particles known per se through a reaction between magnesium chloride and an alkali substance in an aqueous medium. Preferred examples of the alkali substance include ammonia, alkali metal hydroxides (typical examples thereof are potassium hydroxide and sodium hydroxide) and calcium hydroxide. The alkali substance is used in an amount of 0.5 to 1.0 equivalent, preferably 0.6 to 0.8 equivalent based on 1 equivalent of magnesium chloride.

Examples of the additive compound which is existent in the reaction system are monovalent carboxylic acids and water-soluble salts thereof which may be used in combination of two or more. The monovalent carboxylic acids include acetic acid, propionic acid and butyric acid. The water-soluble salts of these monovalent carboxylic acids include alkali metal salts, alkali earth metal salts, ammonium salts and organic amine salts.

The additive compound is used in an amount of 10 to 200 mol%, preferably 50 to 100 mol% based on magnesium chloride. By changing the amount of this additive compound within this range, the aspect ratio (H) of the obtained magnesium hydroxide particles can be arbitrarily controlled. In order to obtain particles having a desired aspect ratio (H), mainly the type and amount of the additive compound can be determined through preliminary simple experiments. Roughly speaking, a higher aspect ratio (H) tends to be obtained as the content (concentration) of the additive compound is higher. The preferred range of the amount of the additive compound differs according to the type of the additive compound. When the additive compound is acetic acid or a salt thereof, the amount of the additive compound is preferably 10 to 200 mol%, particularly preferably 50 to 100 mol% based on magnesium chloride. When the additive compound is propionic acid, butyric acid or a water-soluble salt thereof, the amount of the additive compound is preferably 30 to 80 mol% based on magnesium chloride. The reaction between magnesium chloride and the alkali substance in an aqueous medium (preferably water) is carried out generally at 0 to 60°C, preferably 10 to 50°C, under agitation.

Uniform particles having a narrow particle size distribution can be obtained by further hydrothermally processing the obtained magnesium hydroxide particles. The hydrothermal processing is carried out at 100 to 250°C, preferably at 120 to 200°C, for 20 minutes to 48 hours, preferably 2 to 12 hours in an aqueous medium.

### (production process (II))

This production process is characterized in that, in a process for producing magnesium hydroxide particles by reacting magnesium chloride with an alkali substance in an aqueous medium and hydrothermally processing the obtained slurry of magnesium hydroxide particles, the hydrothermal processing is carried out by adding at least one compound selected from the group consisting of monovalent carboxylic acids and water-soluble salts thereof in an amount of 10 to 200 mol% based on magnesium hydroxide.

In this production process (II), the additive compound is not existent in the reaction step of the production process (I) but is existent in the hydrothermal processing step. Therefore, the production process (II) substantially differs from the production process (I). Consequently, the reaction between magnesium chloride and the alkali substance in the production process (II) is the same as that in the production process (I) including the type and amount of the alkali substance and reaction conditions. The type of the additive compound in the hydrothermal processing is the same as above, and the amount of the additive compound is substantially the same as above except that the formed magnesium hydroxide is used as the basis.

### (production process (III))

This production process is characterized in that, in a process for producing magnesium hydroxide particles by carrying out the hydration reaction of magnesium oxide in an aqueous medium, the hydration reaction is carried out by adding at least one compound selected from the group consisting of monovalent carboxylic acids and water-soluble salts thereof in an amount of 10 to 200 mol% based on magnesium oxide. The feature of this production process (III) is that a predetermined amount of the additive compound is existent in the reaction system in the process for producing magnesium hydroxide particles known per se by the hydration reaction of magnesium oxide in an aqueous medium. This hydration reaction is generally carried out at 0 to 100°C, preferably at 20 to 80°C, for 20 minutes to 5 hours, preferably 30 minutes to 4 hours, under agitation.

The additive compound to be added to the reaction system is selected from the same compounds which have been explained for the production process (I). The amount of the additive compound is 10 to 200 mol%, preferably 50 to 100 mol% based on magnesium oxide. Magnesium hydroxide particles (A) are obtained by the above hydration reaction. Excellent uniform particles having a narrow particle size distribution can be obtained by further hydrothermally processing the obtained magnesium hydroxide particles. This hydrothermal processing is desirably carried out at 100 to 250°C, preferably 120 to 200°C, for 20 minutes to 48 hours, preferably 2 to 12 hours.

### (production process (IV))

This production process is characterized in that, in a process for producing magnesium hydroxide particles by carrying out the hydration reaction of magnesium oxide in an aqueous medium and hydrothermally processing the obtained slurry of magnesium hydroxide particles, the hydrothermal processing is carried out by adding at least one compound selected from the group consisting of monovalent carboxylic acids and water-soluble salts thereof in an amount of 10 to 200 mol% based on magnesium hydroxide.

In this production process (IV), the additive compound is not existent in the hydration reaction of the production process (III) but is existent in the hydrothermal processing step. Therefore, the production process (IV) substantially differs from the production process (III). Consequently, the conditions of the hydration reaction in this production process (IV) are substantially the same as those explained for the production process (III). The type of the additive compound in the hydrothermal processing is the same as that explained for the production process (I). The amount of the additive compound is also substantially the same as that explained for the above production process (III) except that the formed magnesium hydroxide is used as the basis.

By employing any one of the above production processes (I) to (IV), magnesium hydroxide particles (A) can be obtained. Out of these processes, the production processes (I) and (III) are preferred, and particles which are uniform in particle size and aspect ratio and have high quality can be obtained by further carrying out hydrothermal processing after the reaction in these processes. The obtained magnesium hydroxide particles (A) can be powdered by such means as filtration, dehydration, drying and grinding.

### <magnesium hydroxide particles (B)>

In the composite flame retardant of the present invention, the magnesium hydroxide particles (B) which are used to be mixed with the magnesium hydroxide particles (A) are not particularly limited if they have an aspect ratio of less than 20 and are conventionally known as a flame retardant. Stated more specifically, preferably, the magnesium hydroxide particles (B) have an average aspect ratio of 1 to 15, an average width of 1 µm or less, preferably 0.7 µm or less and a BET specific surface area of 1 to 150 m²/g.

The aspect ratio, average width and BET specific surface area of the magnesium hydroxide particles (B) are measured by the same methods as those for the magnesium hydroxide particles (A).

The content of the magnesium hydroxide particles (B) is 100 to 900 parts by weight, preferably 200 to 700 parts by weight, more preferably 200 to 400 parts by weight based on 100 parts by weight of the magnesium hydroxide particles (A).

### <resin composition>

The composite flame retardant of the present invention can be mixed with a synthetic resin which is to contain magnesium hydroxide particles as a flame retardant. The content of the composite flame retardant is 50 to 200 parts by weight, preferably 60 to 190 parts by weight based on 100 parts by weight of the synthetic resin.

Examples of the synthetic resin include thermoplastic resins such as C₂∼C₈ olefin (α-olefin) polymers and copolymers including polyethylene, polypropylene, ethylene/propylene copolymer, polybutene and poly. 4-methylpentene-1, olefin-diene copolymers, ethylene-acrylate copolymer, polystyrene, ABS resin, AAS resin, AS resin, MBS resin, ethylene/vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

Out of these thermoplastic resins, polyolefins and copolymers thereof are preferred, as exemplified by polypropylene-based resins such as polypropylene homopolymer and ethylene-propylene copolymer, polyethylene-based resins such as high-density polyethylene, low-density polyethylene, linear low-density polyethylene, ultralow density polyethylene, EVA (ethylene vinyl acetate resin), EEA (ethylene ethyl acrylate resin), EMA (ethylene methyl acrylate copolymer resin), EAA (ethylene acrylic acid copolymer resin) and ultrahigh molecular weight polyethylene, and C₂∼C₆ olefin (α-ethylene) polymers and copolymers such as polybutene and poly4-methylpentene-1.

Further, thermosetting resins such as epoxy resin, phenol resin, melamine resin, unsaturated polyester resin, alkyd resin and urea resin, and synthetic rubbers such as EPDM, butyl rubber, isoprene rubber, SBR, NBR, chlorosulfonated polyethylene, NIR, urethane rubber, butadiene rubber, acrylic rubber, silicone rubber and fluorine rubber are also included.

Although the magnesium hydroxide particles (A) and (B) may be mixed with a synthetic resin as they are, they may be treated with a surface treating agent before use.

Examples of the surface treating agent include higher fatty acids having 10 or more carbon atoms such as stearic acid, erucic acid, palmitic acid, lauric acid and behenic acid.

Alkali metal salts of the above higher fatty acids are also included. Sulfuric acid ester salts of a higher alcohol such as stearyl alcohol and oleyl alcohol are further included.

Anionic surfactants such as sulfuric acid ester salts of polyethylene and glycol ether, amide bonded sulfuric acid ester salts, ester bonded sulfuric acid ester salts, ester bonded sulfonates, amide bonded sulfonic acid salts, ether bonded sulfonic acid salts, ether bonded alkyl aryl sulfonic acid salts, ester bonded alkyl aryl sulfonic acid salts and amide bonded alkyl aryl sulfonic acid salts are further included.

Mono- and di-esters of orthophosphoric acid and oleyl alcohol or stearyl alcohol, mixtures thereof, and phosphoric acid esters of an acid or alkali metal salt or amine salt are still further included.

Silane coupling agents such as vinyl trichlorosilane, vinyl trimethoxysilane, vinyl triethoxysilane, vinyl tris(βmethoxyethoxy)silane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane and γ-mercaptopropyltrimethoxysilane are also included. Titanate-based coupling agents such as isopropyltriisostearoyl titanate, isopropyltris(dioctylpyrophosphate)titanate, isopropyltri(N-aminoethyl-aminoethyl)titanate, isopropyltridecylbenzene sulfonyl titanate, tetraoctylbis(ditridecylphosphite)titanate, bis(dioctylpyrophosphate)oxyacetate titanate, isopropyltridecylbenzene sulfonyl titanate, tetraisopropyl bis(dioctylphosphite)titanate, tetra(2,2-diallyloxymethyl-1-butyllbis-(ditridecyl) phosphite titanate, bis(dioctylpyrophosphate)ethylene titanate, isopropyltrioctanoyl titanate, isopropyldimethacryl isostearoyl titanate, isopropylisostearoyl diacryl titanate, isopropyltri(dioctylphosphate)titanate, isopropyltricumylphenyl titanate, dicumylphenyloxy acetate titanate and diisostearoyl ethylene titanate are also included.

Aluminum-based coupling agents such as acetoalkoxyaluminum diisopropylate are further included.

Triphenyl phosphite, diphenyl·tridecyl phosphite, phenyl·ditridecyl phosphite, phenyl·isodecyl phosphite, tri·nonylphenyl phosphite, 4,4'-butylidene-bis(3-methyl-6-t-butylphenyl)-ditridecyl phosphite and trilauryl thiophosphite are further included.

Esters of a polyhydric alcohol and a fatty acid such as glycerin monostearate and glycerin monooleate are still further included.

To coat the surfaces of magnesium hydroxide particles with a surface treating agent, a wet process or a dry process known per se may be used. For example, as the wet process, the surface treating agent in a liquid or emulsion form is added to the slurry of magnesium hydroxide particles and fully mixed with the slurry mechanically at a temperature of 100°C or lower. As the wet process, the surface treating agent in a liquid, emulsion or solid form is added to the magnesium hydroxide particles under agitation and fully mixed with the particles under heating or non-heating by means of a mixer such as Henschel mixer. The amount of the surface treating agent can be suitably selected but preferably about 10 wt% or less based on the weight of the magnesium hydroxide particles. A final product can be produced by suitably selecting and carrying out means such as rinsing, dehydration, granulation, drying, grinding and classification on the surface treated magnesium hydroxide particles as required.

### <molded article>

The present invention includes a molded article formed from the above resin composition. Examples of the molded article include a flame retardant electric wire cable coated with the above resin composition.

### <use>

The present invention include use of the composite flame retardant comprising (i) 100 parts by weight of magnesium hydroxide particles (A) having an average thickness of 10 to 100 nm, an average width of 2.4 µm or more and an average aspect ratio of 20 to 120 and (ii) 100 to 900 parts by weight of magnesium hydroxide particles (B) having an average width of 1 µm or less and an average aspect ratio of less than 20 as a flame retardant for synthetic resins.

### EXAMPLES

The following examples are provided for the purpose of further illustrating the present invention but are in no way to be taken as limiting. In Examples, the (1) average width, (2) BET specific surface area, (3) average thickness and (4) average aspect ratio of the magnesium hydroxide particles are values measured or calculated by the following methods.

### (1) Average width

This was measured by using a scanning electron microscope (S-3000N of Hitachi, Ltd.). 5 mg of a sample powder was added to 5 ml of ethanol, treated with ultrasonic waves for 10 minutes and evaporated on an aluminum sample table, and gold evaporation was carried out to prepare measurement samples. The long diameters of 10 particles in total were actually measured in the view field at 10,000 magnifications to calculate an arithmetic average value as the average width.

### (2) BET specific surface area of magnesium hydroxide particles

This was measured by a liquid nitrogen adsorption method.

### (3) Average thickness

This was measured by using a nano-search microscope (manufactured by OLYMPUS Corporation, SPM mode). 1 mg of the sample powder was added to 5 ml of ethanol, treated with ultrasonic waves for 10 minutes and evaporated on a mica crystal plate to prepare measurement samples. A total of 10 measurement samples were measured to calculate an arithmetic average value as the average width.

### (4) Average aspect ratio

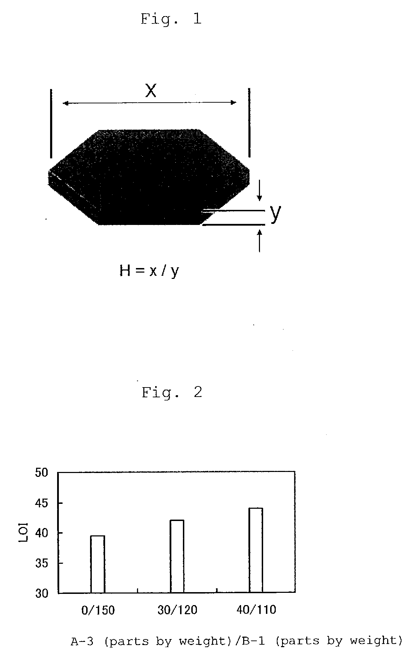

Based on the assumption that magnesium hydroxide particles are each a single crystal having a regular hexagonal columnar shape with the same particle size as shown in Fig.1, X was obtained based on the following actually measured A and Y values to calculate the aspect ratio.
X: average width (nm)
Y: average thickness (nm)
H: average aspect ratio (X/Y)

### (5) Weight ratio of particles (A) to particles (B)

This was measured by using a scanning electron microscope (S-3000N of Hitachi, Ltd.). 5 mg of the sample powder was added to 5 ml of ethanol, treated with ultrasonic waves for 10 minutes and evaporated on an aluminum sample table, and gold evaporation was carried out to prepare measurement samples. A total of 10 measurement samples in the view field were measured at 10,000 magnifications to obtain the areas occupied in the view field of the particles (A) and (B) actually or by using analytical software so as to calculate arithmetic average values as the average occupied areas. The weight ratio of the particles (A) and the particles (B) was obtained by multiplying the average occupied areas with the average thicknesses of the particles (A) and the particles (B).

### Synthesis Example 1 (magnesium hydroxide particles A-1)

200 ml of a magnesium chloride aqueous solution prepared to a concentration of 4.28 mol/L and 50 mol% based on magnesium chloride of sodium acetate trihydrate (manufactured by Wako Pure Chemical Industries, Ltd.) were put into an autoclave, and 412 ml of a 3.33N caustic soda aqueous solution was added dropwise to the mixture under agitation to carry out a reaction at 30°C for 20 minutes so as to obtain a magnesium hydroxide particle suspension liquid. This suspension liquid was hydrothermally processed at 170°C for 4 hours, dehydrated, rinsed (200 ml) and dried at 105°C for 24 hours to obtain magnesium hydroxide particles A-1.

The average width, average thickness, BET specific surface area and average aspect ratio of the particles A-1 are shown in Table 1 below.

### Synthesis Example 2 (magnesium hydroxide particles A-2)

200 ml of a magnesium chloride aqueous solution (manufactured by Wako Pure Chemical Industries, Ltd.) prepared to a concentration of 4.28 mol/L was put into an autoclave, and 412 ml of a 3.33N caustic soda aqueous solution was added dropwise to this under agitation to carry out a reaction at 30°C for 20 minutes so as to obtain a magnesium hydroxide particle suspension liquid. Sodium acetate trihydrate (manufactured by Wako Pure chemical Industries, Ltd.) was added in an amount of 100 mol% based on magnesium chloride to this suspension liquid, stirred for 5 minutes, hydrothermally processed at 170°C for 12 hours, dehydrated, rinsed (200 ml) and dried at 105°C for 24 hours to obtain magnesium hydroxide particles A-2.

The average width, average thickness, BET specific surface area and average aspect ratio of the particles A-2 are shown in Table 1 below.

### Synthesis Example 3 (magnesium hydroxide particles A-3)

500 ml of a magnesium chloride aqueous solution prepared to a concentration of 1.50 mol/L was put into an autoclave, and 350 ml of a 3.00N caustic soda aqueous solution was added dropwise to the above solution under agitation to carry out a reaction at 30 °C for 20 minutes so as to obtain a magnesium hydroxide particle suspension liquid. Sodium propionate (manufactured by Wako Pure Chemical Industries, Ltd.) was added in an amount of 60 mol% based on magnesium chloride to this suspension liquid, stirred for 5 minutes, hydrothermal processed at 170°C for 4 hours, dehydrated, rinsed (200 ml) and dried at 105°C for 24 hours to obtain magnesium hydroxide particles A-3.

The average width, average thickness, BET specific surface area and average aspect ratio of the particles A-3 are shown in Table 1 below.

### Synthesis Example 4 (magnesium hydroxide particles B-1)

200 ml of a magnesium chloride aqueous solution prepared to a concentration of 4.28 mol/L was put into an autoclave, and 412 ml of a 3. 33N caustic soda aqueous solution was added dropwise to this under agitation to carry out a reaction at 30°C for 20 minutes so as to obtain a magnesium hydroxide particle suspension liquid. This suspension liquid was hydrothermally processed at 170°C for 4 hours, dehydrated, rinsed (200 ml) and dried at 105°C for 24 hours to obtain magnesium hydroxide particles B-1.

The average width, average thickness, BET specific surface area and average aspect ratio of the particles B-1 are shown in Table 1 below.

**Table 1**

| | Unit | Synthesis Example 1 | Synthesis Example 2 | Synthesis Example 3 | Synthesis Example 4 |
|---|---|---|---|---|---|
| Particle name | - | A-1 | A-2 | A-3 | B-1 |
| Average width (X) | µm | 2.495 | 3.546 | 4.609 | 0.685 |
| Average thickness (Y) | nm | 55 | 45 | 44 | 180 |
| Average aspect ratio (H) | - | 45.4 | 78.8 | 104.8 | 3.8 |
| BET specific surface area | m²/g | 7.68 | 8.23 | 7.30 | 5.80 |

### Example 1 (composite flame retardant C-1)

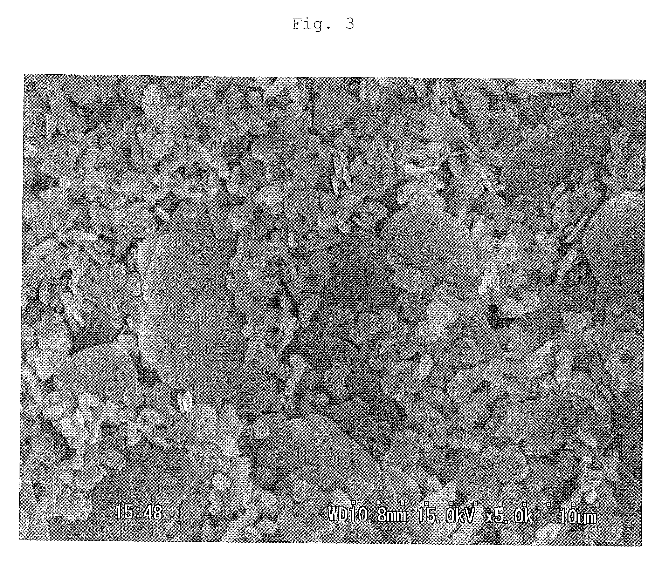

30 parts by weight (100 parts by weight) of the particles (A-2) obtained in Synthesis Example 2 were mixed with 120 parts by weight (400 parts by weight) of the particles (B-1) obtained in Synthesis Example 4 to produce a composite flame retardant C-1. A scanning electron microphotograph (SEM) of the composite flame retardant C-1 is shown in Fig. 3 (5,000 magnifications).

### Example 2 (composite flame retardant C-2)

40 parts by weight (100 parts by weight) of the particles (A-2) obtained in Synthesis Example 2 were mixed with 110 parts by weight (275 parts by weight) of the particles (B-1) obtained in Synthesis Example 4 to produce a composite flame retardant C-2.

### Comparative Example 1 (production of resin composition)

150 parts by weight of the particles (B-1) obtained in Synthesis Example 4 were added to 100 parts by weight of polyethylene (PE) to prepare a resin composition. PE and magnesium hydroxide particles were melt kneaded together at 150°C by using a plastomill (manufactured by BRABENDER GmbH & Co.), and the obtained resin composition was press molded (Shindo SF type hydraulic press of Shinto Metal Industries Corporation) to prepare a test specimen having an arbitrary thickness.

A flammability test was made on the test specimen in accordance with a UL94 vertical burn test method (1/8 inch). The tensile elongation of the obtained resin composition was measured in accordance with JIS K7161. The results are shown in Table 2.

### Example 3 (production of resin composition)

150 parts by weight of the composite flame retardant C-1 obtained in Example 1 was mixed with 100 parts by weight of polyethylene (PE) to prepare a resin composition. The kneading method and the method of preparing a test specimen were the same as those in Comparative Example 1.

A flammability test was made on the test specimen in accordance with a UL94 vertical burn test method (1/8 inch) . The tensile elongation of the obtained resin composition was measured in accordance with JIS K7161. The results are shown in Table 2.

### Example 4 (production of resin composition)

150 parts by weight of the composite flame retardant C-2 obtained in Example 2 was mixed with 100 parts by weight of polyethylene (PE) to prepare a resin composition. The kneading method and the method of preparing a test specimen were the same as those in Comparative Example 1.

A flammability test was made on the test specimen in accordance with a UL94 vertical burn test method (1/8 inch). The tensile elongation of the obtained resin composition was measured in accordance with JIS K7161. The results are shown in Table 2.

**Table 2**

| | Mixing ratio (parts by weight) | | | UL94V | Tensile elongation (%) |
|---|---|---|---|---|---|
| | PE | Composite flame retardant | | | |
| | | B-1 | A-2 | | |
| Comparative Example 1 | 100 | 150 | - | Not up to standard | 20 |
| Example 3 | 100 | 120 | 30 | V-0 | 16 |
| Example 4 | 100 | 110 | 40 | V-1 | 18 |

To achieve V-0 rating with magnesium hydroxide (B) alone, at least 160 parts by weight of magnesium hydroxide (B) must be used. However, as understood from Examples 3 and 4, a greater flame retarding effect is obtained with a smaller amount of magnesium hydroxide than before by using a combination of magnesium hydroxide (A) and magnesium hydroxide (B).

As understood from Examples 3 and 4 and Comparative Example 1, the resin composition comprising the composite flame retardant of the present invention exhibits the same level of tensile elongation as that of the resin composition comprising magnesium hydroxide (B).

### Example 5 (composite flame retardant C-3)

A composite flame retardant C-3 was produced by mixing 30 parts by weight (100 parts by weight) of the particles (A-3) obtained in Synthesis Example 3 with 120 parts by weight (400 parts by weight) of the particles (B-1) obtained in Synthesis Example 4.

### Example 6 (composite flame retardant C-4)

A composite flame retardant C-4 was produced by mixing 40 parts by weight (100 parts by weight) of the particles (A-3) obtained in Synthesis Example 3 with 110 parts by weight (275 parts by weight) of the particles (B-1) obtained in Synthesis Example 4.

### Comparative Example 2 (production of resin composition)

A resin composition was produced by adding 2 parts by weight of a silane coupling agent (manufactured by Nippon Unicar Co. , Ltd.), 2 parts by weight of dicumyl peroxide (DCP, manufactured by Mitsui Petrochemical Industries, Ltd.), 2 parts by weight of a hindered phenol-based antioxidant (manufactured by Ciba-Geigy Corporation) and 150 parts by weight of the particles (B-1) obtained in Synthesis Example 4 to 100 parts by weight of an ethylene-vinyl acetate copolymer (EVA, manufactured by Nippon Unicar Co., Ltd.). The above raw materials were melt kneaded together at 80°C by using a plastomill (manufactured by BRABENDER GmbH & Co.), and the obtained resin composition was press molded (Shindo SF type hydraulic press of Shinto Metal Industries Corporation) to prepare a test specimen having an arbitrary thickness.

To evaluate the combustion continuity of the test specimen, an oxygen index test LOI was made in accordance with ASTM D2863. The results are shown in Table 3 and Fig. 2.

### Example 5 (production of resin composition)

A resin composition was produced by adding 2 parts by weight of a silane coupling agent (manufactured by Nippon Unicar Co. , Ltd.), 2 parts by weight of dicumyl peroxide (DCP, manufactured by Mitsui Petrochemical Industries, Ltd.), 2 parts by weight of a hindered phenol-based antioxidant (manufactured by Ciba-Geigy Corporation) and 150 parts by weight of the particles (C-3) obtained in Example 5 to 100 parts by weight of an ethylene-vinyl acetate copolymer (EVA, manufactured by Nippon Unicar Co., Ltd.). The kneading method and the method of preparing a test specimen were the same as those in Comparative Example 2.

To evaluate the combustion continuity of the test specimen, an oxygen index test LOI was made in accordance with ASTM D2863. The results are shown in Table 3 and Fig. 2.

### Example 6 (production of resin composition)

A resin composition was produced by adding 2 parts by weight of a silane coupling agent (A-172, manufactured by Nippon Unicar Co., Ltd.), 2 parts by weight of dicumyl peroxide (DCP, manufactured by Mitsui Petrochemical Industries, Ltd.), 2 parts by weight of a hindered phenol-based antioxidant (IRGANOX1010, manufactured by Ciba-Geigy Corporation) and 150 parts by weight of the particles (C-4) obtained in Example 5 to 100 parts by weight of an ethylene-vinyl acetate copolymer (EVA, manufactured by Nippon Unicar Co., Ltd.). The kneading method and the method of preparing a test sample were the same as those in Comparative Example 2.

To evaluate the combustion continuity of the test specimen, an oxygen index test LOI was made in accordance with ASTM D2863. The results are shown in Table 3 and Fig. 2.

**Table 3**

| | Mixing ratio (parts by weight) | | | | | | LOI |
|---|---|---|---|---|---|---|---|
| | EVA | A-172 | DCP | IRGANOX1010 | Composite flame retardant | | |
| | | | | | B-1 | A-3 | |
| Comparative Example 2 | 100 | 2 | 2 | 2 | 150 | - | 39.5 |
| Example 5 | 100 | 2 | 2 | 2 | 120 | 30 | 42.0 |
| Example 6 | 100 | 2 | 2 | 2 | 110 | 40 | 44.0 |

### Effect of the Invention

Since the composite flame retardant of the present invention contains magnesium hydroxide particles (A) having a high aspect ratio and different magnesium hydroxide particles (B) in a certain ratio, a satisfactory flame retarding effect is obtained with a relatively low content based on the resin. The composite flame retardant of the present invention is excellent in dispersibility in a resin.

## Claims

1. A composite flame retardant containing
(i) 100 parts by weight of magnesium hydroxide particles (A) having an average thickness of 10 to 100 nm, an average width of 2.4 µm or more and an average aspect ratio of 20 to 120 and
(ii) 100 to 900 parts by weight of magnesium hydroxide particles (B) having an average width of 1 µm or less and an average aspect ratio of less than 20.

2. A resin composition comprising 100 parts by weight of a synthetic resin and 50 to 200 parts by weight of the composite flame retardant of claim 1.

3. A molded article formed from the resin composition of claim 2.

4. A flame retardant electric wire cable coated with the resin composition of claim 2.

## Patentansprüche

1. Verbundflammverzögerungsmittel, welches enthält:
(i) 100 Gewichtsteile Magnesiumhydroxidpartikel (A) mit einer mittleren Dicke von 10 bis 100 nm, einer mittleren Breite von 2,4 µm oder mehr und einem mittleren Aspektverhältnis von 20 zu 120 und
(ii) 100 bis 900 Gewichtsteile Magnesiumhydroxidpartikel (B) mit einer mittleren Breite von 1 µm oder weniger und einem mittleren Aspektverhältnis von unter 20.

2. Harzzusammensetzung, welche 100 Gewichtsteile eines Kunstharzes und 50 bis 200 Gewichtsteile des Verbundflammverzögerungsmittels nach Anspruch 1 umfasst.

3. Aus der Harzzusammensetzung nach Anspruch 2 geformtes Formerzeugnis.

4. Flammverzögerndes Stromdrahtkabel, das mit der Harzzusammensetzung nach Anspruch 2 beschichtet ist.

## Revendications

1. Agent ignifugeant composite comprenant
i) 100 parties en poids de particules d'hydroxyde de magnésium (A) qui présentent une épaisseur moyenne de 10 à 100 nm, une largeur moyenne de 2,4 µm ou plus, et un rapport de forme moyen de 20 à 120,
ii) et 100 à 900 parties en poids de particules d'hydroxyde de magnésium (B) qui présentent une largeur moyenne de 1 µm ou moins, et un rapport de forme moyen inférieur à 20.

2. Composition de résine comprenant 100 parties en poids d'une résine synthétique et 50 à 200 parties en poids d'un agent ignifugeant conforme à la revendication 1.

3. Article moulé formé à partir d'une composition de résine conforme à la revendication 2.

4. Câble de fils électriques ignifugé, revêtu d'une composition de résine conforme à la revendication 2.
